# EUROPÄISCHE PATENTANMELDUNG

(11) **EP 1 587 194 A2**
(43) Veröffentlichungstag der Anmeldung: **19.10.2005**
(21) Anmeldenummer: 05008144.7
(22) Anmeldetag: 14.04.2005
(51) Int. Cl.: H02G 3/04

(54) **Installationsbauelement zur Unterbringung von Versorgungsleitungen**

(30) Priorität: 16.04.2004 DE 102004018472
(71) Anmelder: REHAU AG + Co, 95111 Rehau (DE)
(72) Erfinder: Weidner, Clemens, 90542 Eckental (DE); Schinzel, Hartmut, 95213 Münchberg (DE); Söllner, Wolfgang, 95176 Konradsreuth (DE); Albrecht, Theo, 83043 Bad Aibling (DE)

(57) **Zusammenfassung**

Ein Installationsbauelement (1) dient zur Unterbringung von Versorgungsleitungen. Es hat ein Trägerprofil (4) und mindestens ein Abdeckprofil (8). Zwischen dem Trägerprofil (4) und dem Abdeckprofil (8) ist ein Unterbringungsraum (12) gebildet. Das Abdeckprofil (8) ist zumindest abschnittsweise am Trägerprofil (4) über eine Verbindungseinrichtung (15) fixiert. Diese umfasst ein Scharnierelement (16) mit einem trägerprofilseitigen (17) und einem abdeckprofilseitigen (18) Scharnierkörper. Diese sind über ein Scharniergelenk (23) derart miteinander verbunden, dass in einer Schließstellung des Scharnierelements (16) der Unterbringungsraum (12) nicht von außen einsehbar ist, und in einer Offenstellung des Scharnierelements (16) der Unterbringungsraum (12) von außen frei zugänglich ist. Ferner umfasst die Verbindungseinrichtung (15) ein Rastelement (24) mit einem Rastkörper (25) und einem Gegenkörper (26). Das Rastelement (24) ist derart ausgeführt, dass es in einer Raststellung das Abdeckprofil (8) am Trägerprofil (4) in der Schließstellung des Scharnierelements (16) fixiert und in einer Freigabestellung ein Verschwenken des Abdeckprofils (8) relativ zum Trägerprofil (4) um das Schwenkgelenk (23) ermöglicht. Es resultiert ein flexibel einsetzbares Installationsbauelement (1).

## Beschreibung

Die Erfindung betrifft ein Installationsbauelement zur Unterbringung von Versorgungsleitungen nach dem Oberbegriff des Anspruchs 1.

Ein derartiges Installationsbauelement ist durch offenkundige Vorbenutzung bekannt. Die Flexibilität dieser Installationsbauelemente lässt, was die verschiedenen Installationsanforderungen angeht, zu Wünschen übrig. So ist bei den bekannten Installationsbauelementen im Rahmen einer Erstmontage zwar eine Unterbringung von Versorgungsleitungen möglich, eine nachträgliche, spätere Unterbringung ist jedoch nicht oder nur mit großem Aufwand möglich.

Es ist daher die Aufgabe der vorliegenden Erfindung, ein Installationsbauelement der eingangs genannten Art derart weiterzubilden, dass eine größere Flexibilität hinsichtlich verschiedener Installationsanforderungen gewährleistet ist.

Diese Aufgabe ist erfindungsgemäß gelöst durch ein Installationsbauelement mit den Merkmalen des Kennzeichnungsteils des Anspruchs 1.

Das erfindungsgemäße Installationsbauelement kann mit Endlos-Profilen realisiert werden. Installationsaufnahmen, in denen Versorgungs-Steckelemente zur Ankopplung der Versorgungsleitungen angeordnet sind, können sowohl im Abdeckprofil, also von außen sichtbar und zugänglich, oder im Trägerprofil, also versteckt, angeordnet sein. Sofern mit dem erfindungsgemäßen Installationsbauelement daher ausschließlich eine dauerhafte Installation vorgesehen ist, müssen keine Verbindungs-Steckelemente von außen sichtbar angebracht sein. Die Verbindungseinrichtung schafft eine einfache Zugänglichkeit zum Unterbringungsraum, ohne dass hierzu Einzelteile abgenommen werden müssen. Das Abdeckprofil kann einfach in eine Offenstellung geschwenkt werden, in der der Unterbringungsraum zugänglich ist. Unterzubringende Versorgungsleitungen können Elektroleitungen, aber auch z. B. Druckluftleitungen sein. Das Installationsbauelement kann als Säule, also vertikal, oder auch horizontal angebracht werden. Die letztere Anbringungsvariante ist insbesondere zur Elektroinstallation von Geräten von einander angrenzenden Schreibtischen eines Büros vorteilhaft.

Dabei ist eine versenkte oder eine auf die Schreibtische aufgesetzte Montage der Installationsbauelemente möglich. Insgesamt resultiert ein sehr flexibel einsetzbares Installationsbauelement.

Bei einem Installationsbauelement nach Anspruch 2 können über die Anbindung der separaten Bauteile an die Profile Fertigungs- oder Einbautoleranzen ausgeglichen werden.

Kunststoffbauteile nach Anspruch 3 sind kostengünstig herstellbar.

Bauteile nach Anspruch 4 weisen einerseits eine ausreichende Elastizität zum Ausgleich von Fertigungs- oder Einbautoleranzen auf und sind andererseits sehr stabil, sodass die Funktion dieser Bauteile auch nach vielmaligem Öffnen und Schließen erhalten bleibt.

Halteklammern nach Anspruch 5 gewährleisten eine definierte Führung der Versorgungsleitungen.

Mindestens eine Längsnut nach Anspruch 6 ermöglicht den Einsatz des Installationsbauelements als Trägerelement für weitere Bauteile. Als derartige Bauteile können beispielsweise Beleuchtungselemente, Trennwände, z. B. Raumteiler, Hinweisschilder, Ventilatoren, Klimageräte, Nachtbeleuchtungen, insbesondere ausgeführt als LEDs, oder Hinweisleuchten eingesetzt werden.

Eine Erdungsbrücke nach Anspruch 7 schafft einen sicheren Potentialausgleich zwischen den Profilen.

Ein flexibler Wandabschnitt nach Anspruch 8 gewährleistet, dass auf Höhe des flexiblen Wandabschnitts eine Versorgungsleitung im Installationsbauelement installiert werden kann. Damit können Versorgungsleitung an verschiedenen Höhen längs des Installationsbauelements in dieses ein- oder aus diesem herausgeführt werden. Sichtbare Längen der Versorgungsleitungen können daher auf ein Minimum reduziert werden.

Mit Hilfe einer Längenverstellung nach Anspruch 9 ist eine Anpassung des Installationsbauelements z. B. an verschiedene Raumhöhen möglich. Auch bei einer horizontalen Anordnung des Installationsbauelements ist eine entsprechende Längeneinstellung möglich.

Ein Teleskop-Ausziehelement nach Anspruch 10 ist kompakt in das Installationsbauelement integriert.

Ein Betätigungselement nach Anspruch 11 ist insbesondere in Verbindung mit dem flexiblen Wandabschnitt nach Anspruch 8 elegant so versteckbar, dass es auch in der Schließstellung der Abdeckprofile nicht oder nur kaum von außen sichtbar ist.

Ausführungsbeispiele der Erfindung werden nachfolgend anhand der Zeichnung näher erläutert. In dieser zeigen:
- Fig. 1: eine perspektivische Ansicht eines Installationsbauelementes mit einem abschnittsweise geöffneten Abdeckprofil, wobei ein Abdeckprofilabschnitt im Bereich von Halteklammern für Versorgungsleitungen gebrochen dargestellt ist;
- Fig. 2: einen vergrößerten Querschnitt durch das Installationsbauelement auf Höhe des geöffneten Abdeckprofilabschnitts; wobei letzterer im Vergleich zu Fig. 1 weniger weit geöffnet gezeigt ist;
- Fig. 3: einen zu Fig. 2 ähnlichen, etwas verkleinerten Schnitt mit weiter geöffnetem Abdeckprofilabschnitt;
- Fig. 4: eine weitere perspektivische und vergrößerte Darstellung eines bodenseitigen Ausschnitts des Installationsbauelements;
- Fig. 5: eine weitere perspektivische und vergrößerte Ansicht des Ausschnitts von Fig. 4; und
- Fig. 6: eine vergrößerte Ansicht eines deckenseitigen Ausschnitts eines alternativen Installationsbauelements.

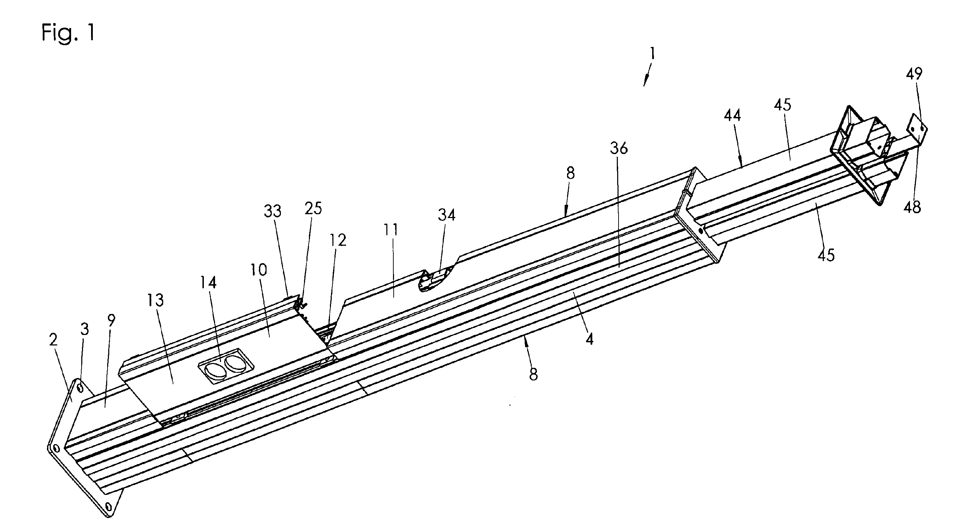

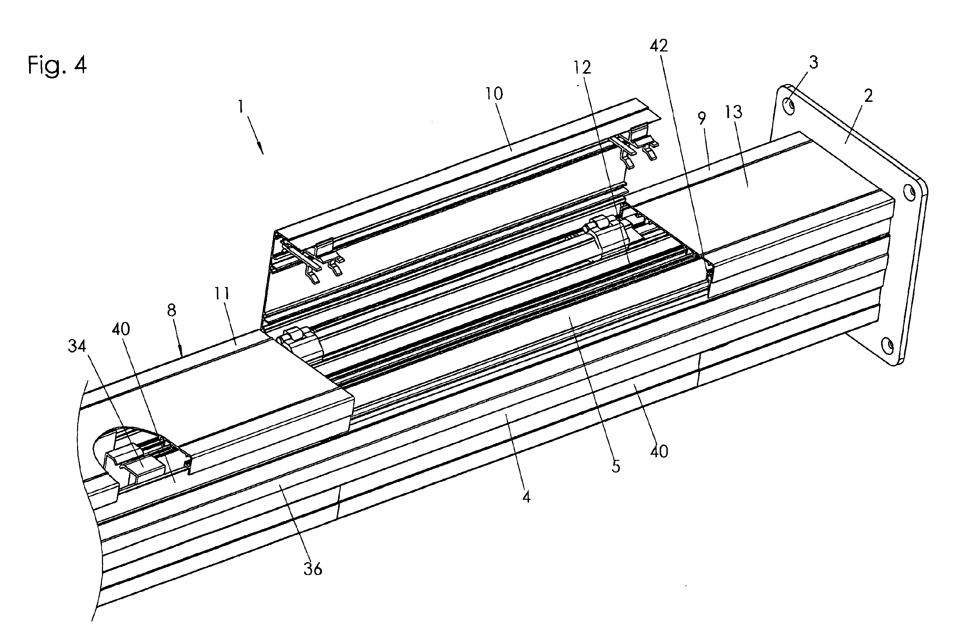

Die Fig. 1 bis 5 zeigen eine erste Ausführungsform eines Installationsbauelements 1. Dieses dient zur Unterbringung von Versorgungsleitungen, z. B. von Elektrokabeln. Das Installationsbauelement 1 ist ein Säulenelement, welches einerseits am Boden und andererseits an der Decke eines Gebäuderaumes befestigt wird. Varianten des Installationsbauelements 1 können auch horizontal angebracht sein.

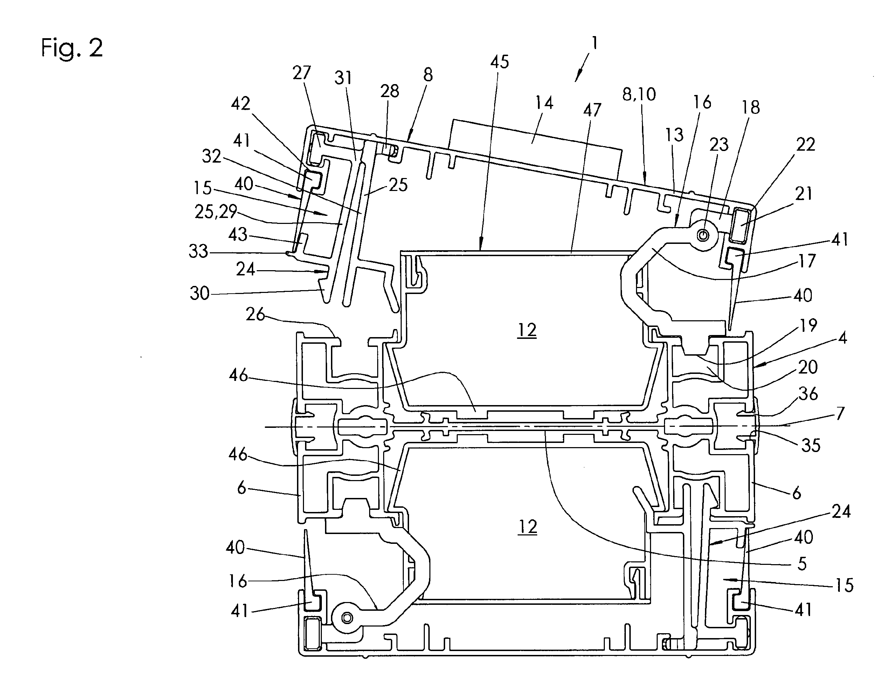

Bodenseitig weist das Installationsbauelement 1 einen Fuß 2 mit vier Befestigungsöffnungen 3 zur Aufnahme von Befestigungsschrauben auf. Am Fuß 2 ist ein zentrales Trägerprofil 4 festgelegt. Letzteres ist ein Endlosprofil aus Aluminium. Wie insbesondere der Querschnittsdarstellung nach Fig. 2 entnommen werden kann, hat das Trägerprofil 4 einen Querschnitt mit einer Doppel-T-Grobkontur. Ein Mittelsteg 5 verbindet zwei symmetrisch gegenüberliegend angeordnete T-Schenkelprofile 6 des Trägerprofils 4. Das Trägerprofil 4 ist auch zu einer Mittelebene 7, in welcher der Mittelsteg 5 liegt, spiegelsymmetrisch. Die T-Schenkelprofile 6 sind als Hohlkammerprofile ausgebildet.

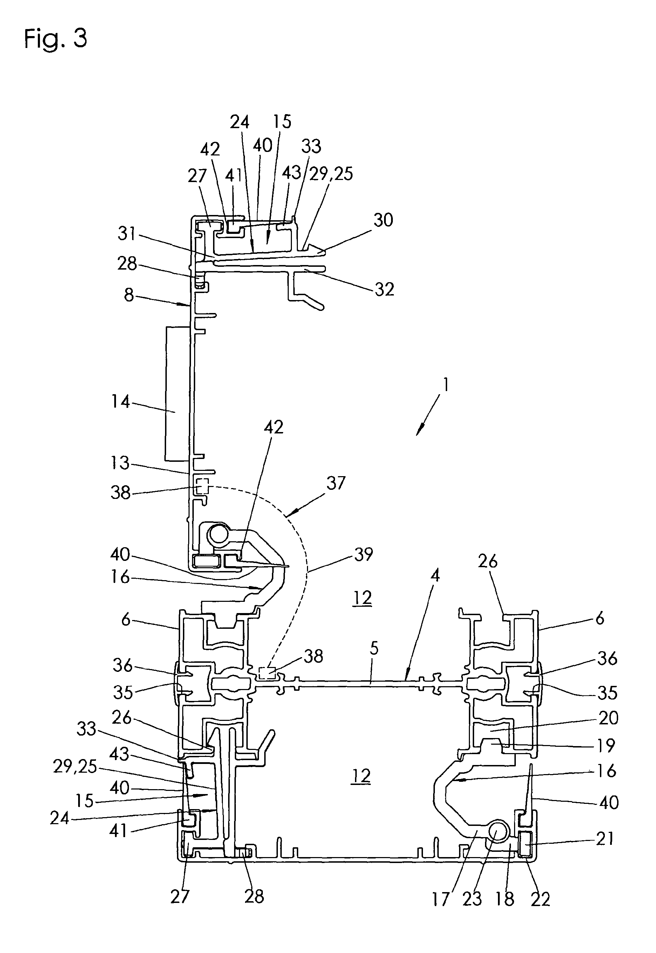

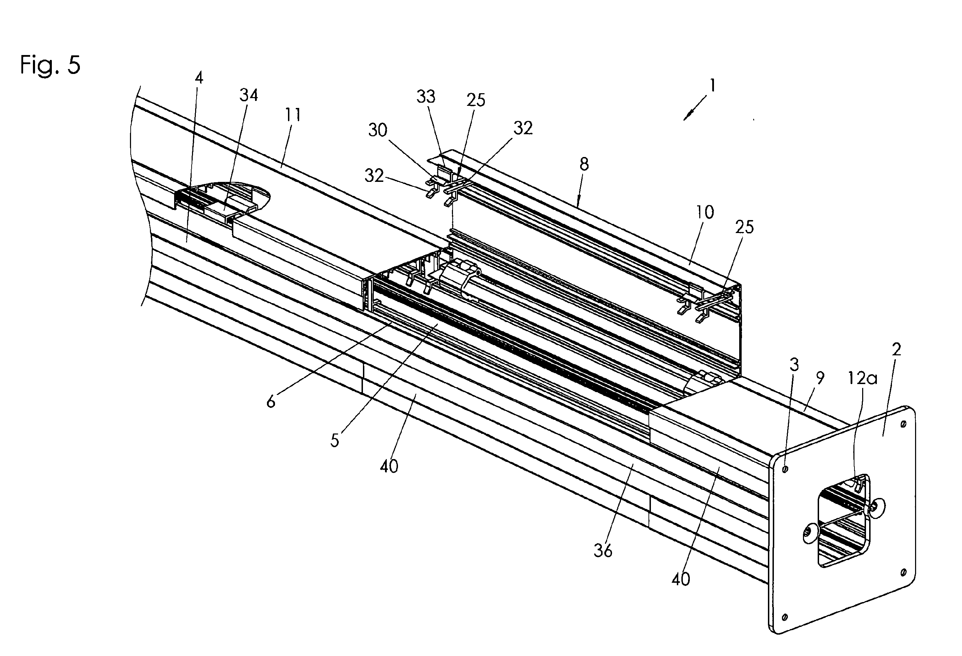

Beiderseits der Mittelebene 7 ist am Trägerprofil 4 jeweils ein ebenfalls als Endlosprofil aus Aluminium ausgeführtes Abdeckprofil 8 angebracht. Die Abdeckprofile 8 sind längs des Trägerprofils 4 in mehrere Abdeckprofilabschnitte unterteilt. Fig. 1 zeigt ausgehend vom Fuß 2 insgesamt drei Abdeckprofilabschnitte 9, 10, 11 des dem Betrachter zugewandten Abdeckprofils 8. Die beiden äußeren Abdeckprofilabschnitte 9 und 11 sind in einer am Trägerprofil 4 fixierten Schließstellung dargestellt. Der zwischenliegende Abdeckprofilabschnitt 9 ist in einer Offenstellung gezeigt, in welcher er einen Unterbringungsraum 12 von außen zugänglich macht, der zwischen dem Trägerprofil 4 und dem Abdeckprofil 8 gebildet ist. Der Fuß 2 weist eine in Fig. 5 dargestellte Montageöffnung 12a auf, die mit den Unterbringungsräumen 12 in Verbindung steht. Eine Offenstellung des Scharnierelements 16, in der der zugeordnete Unterbringungsraum 12 frei zugänglich ist, ist in Fig. 3 gezeigt. In einer Installationsaufnahme einer Installationswand 13 des Abdeckprofilabschnitts 10 ist in Fig. 1 ein Installationskörper in Form einer Elektrobuchse 14 angedeutet.

Die Abdeckprofilabschnitte der Abdeckprofile 8 sind am Trägerprofil 4 jeweils über mindestens eine Verbindungseinrichtung 15 fixiert. Jede dieser Verbindungseinrichtungen 15 für die jeweiligen Abdeckprofilabschnitte weist den gleichen Aufbau auf, sodass es nachfolgend ausreicht, eine der Verbindungseinrichtungen 15 zu beschreiben. Die Verbindungseinrichtung 15 umfasst ein Scharnierelement 16 mit einem trägerprofilseitigen Scharnierkörper 17 und einem abdeckprofilseitigen Scharnierkörper 18. Der trägerprofilseitige Scharnierkörper 18 der in Fig. 2 oberen Verbindungseinrichtung 15 ist über eine Rastnase 19 in eine entsprechend geformte Rastnut einer Hohlkammer 22 des in Fig. 2 rechten T-Schenkelprofils 6 des Trägerprofils 4 eingerastet. Zusätzlich ist der trägerprofilseitige Scharnierkörper 17 mit dem Trägerprofil 4 in nicht dargestellter Weise verschraubt. Der abdeckprofilseitige Scharnierkörper 18 weist eine Verbindungsnase 21 auf, die in eine Verbindungsnut einer Hohlkammer 22 des Abdeckprofils 8 eingeschoben ist. Zusätzlich ist der abdeckprofilseitige Scharnierkörper 18 mit dem Abdeckprofil 8 in nicht dargestellter Weise verschraubt. Die Scharnierkörper 17, 18 sind über ein Schwenkgelenk miteinander verbunden. Die Schwenkachse dieses Schwenkgelenks wird von einem Scharnierstift 23 vorgegeben.

Das Scharnierelement 16 der in Fig. 2 unten dargestellten Verbindungseinrichtung 15 ist in Schließstellung dargestellt. In dieser ist der Unterbringungsraum 12 nicht von außen einsehbar. Das Scharnierelement 16 der in Fig. 2 oben dargestellten Verbindungseinrichtung 15 ist in einer Offenstellung gezeigt. In dieser ist der Unterbringungsraum 12 von außen zugänglich.

Weiterhin umfasst die Verbindungseinrichtung 15 ein Rastelement 24, welches bei der in Fig. 2 oberen Verbindungseinrichtung 15 im linken T-Schenkelprofil 6 des Trägerprofils 4 angeordnet ist, sodass es dem Scharnierelement 16 gegenüberliegt. Dieses weist einen Rastkörper 25 und einen hierzu komplementären Gegenkörper 26 in Form einer Verbindungsnut auf. Der Rastkörper 25 hat zwei Verbindungsnasen 27, 28, die in entsprechende, hierzu komplementär geformte Verbindungsnuten des Abdeckprofils 8 eingeschoben sind. Über die Verbindungsnasen 27, 28 ist daher der Rastkörper 25 am Abdeckprofil 8 fixiert. Ein Raststeg 29, der an seinem freie Ende eine Rastnase 30 aufweist, ist über einen Verbindungssteg 31 elastisch mit einem Paar von Grundstegen 32 des Rastkörpers 25 verbunden. Außen an den Raststeg 29 ist eine Betätigungsfahne 33 angeordnet, die von außen manuell zugänglich ist.

Das in Fig. 2 unten dargestellte Rastelement 24 ist in einer Raststellung gezeigt. In dieser ist die Rastnase 30 des Rastkörpers 25 in den Gegenkörper 26 eingerastet, sodass das Abdeckprofil 8 am Trägerprofil 4 fixiert ist. Das in Fig. 2 oben dargestellte Rastelement 24 ist in einer Freigabestellung gezeigt. In dieser ist der Rastkörper 25 vom Gegenkörper 26 frei und es ist ein Verschwenken des Abdeckprofils 8 relativ zum Trägerprofil 4 um das vom Scharnierstift 23 vorgegebene Schwenkgelenk ermöglicht.

Die Scharnierkörper 17, 18, der Scharnierstift 23, und der Rastkörper 25 sind als zu den Profilen 4, 8 separate Bauteile ausgeführt. Diese separaten Bauteile sind Spritzguß-Bauteile aus glasfaserverstärktem Polymer, z. B. aus Polyamid.

Der Abdeckprofilabschnitt 11 ist in der Zeichnung gebrochen dargestellt und gibt den Blick frei auf eine darunter liegende Halteklammer 34. Letztere ist mittels einer nicht näher dargestellten Rastnase in die den Gegenkörper 26 darstellende Verbindungsnut des Trägerprofils 4 eingerastet. Die Halteklammern 34 sind im Unterbringungsraum 12 zur Führung der Versorgungsleitungen angeordnet.

Die freien, also nicht von den Abdeckprofilen 8 abgedeckten äußeren Stirnwände der T-Schenkelprofile 6 des Trägerprofils 4 weisen jeweils eine im Bereich der Mittelebene 7 liegende Hohlkammer mit einer äußeren Längsnut 35 auf. Letztere ist bei der dargestellten Ausführung jeweils von einem eingerasteten Blendprofil 36 abgedeckt. Über die Längsnuten 35 können weitere Bauteile mit dem Installationsbauelement 1 verbunden werden.

Gestrichelt angedeutet ist in Fig. 3 eine Erdungsbrücke 37, die einen elektrischen Kontakt zwischen dem Trägerprofil 4 und dem in Fig. 3 oberen Abdeckprofil 8 schafft. Die Erdungsbrücke 37 weist zwei Anschlusskörper 38 auf, die in entsprechend geformte Aufnahmenuten der Profile 4 bzw. 8 eingeschraubt sind. Zwischen den Anschlusskörpern 38 verläuft ein Erdungskabel 39. Die Erdungsbrücke 37 ist benachbart zum Scharnierelement 16 im Unterbringungsraum 12 angeordnet. Das Erdungskabel 39 ist flexibel.

Im Bereich der Scharnierelemente 16 einerseits und der Rastelemente 24 andererseits tragen die Abdeckprofile 8 jeweils einen als Lippendichtung ausgeführten flexiblen äußeren Wandabschnitt 40. Letzterer weist jeweils eine Verbindungsnase 41 auf, die in eine hierzu komplementär ausgeformte Verbindungsnut 42 des Abdeckprofils 8 eingeschoben ist. Die flexiblen äußeren Wandabschnitte 40 erstrecken sich längs der gesamten Abdeckprofilabschnitte der Abdeckprofile 8, also auch dort, wo sie nicht mit den separaten Bauteilen der Scharnierelemente 16 einerseits oder der Rastelemente 24 andererseits längs des Installationselements überlappen. Die flexiblen äußeren Wandabschnitte 40 begrenzen daher den Unterbringungsraum 12 in Schließstellung der Scharnierelemente 16 derart, dass, indem die flexiblen äußeren Wandabschnitte 40 bereichsweise verdrängt werden, durch die flexiblen äußeren Wandabschnitte 40 ein Zugang von außen in den Unterbringungsraum 12 auch in dieser Schließstellung möglich ist. Insbesondere kann eine Versorgungsleitung von außen durch abschnittsweises Verdrängen des flexiblen äußeren Wandabschnitts 40 in den Unterbringungsraum 12 auch in der Schließstellung der Scharnierelemente 16 eingeführt sein. Die von den Verbindungsnasen 41 abgewandten freien Enden der rastseitigen flexiblen äußeren Wandabschnitte 40 stützen sich nach innen an einem Führungssteg 43 ab, der an den Raststeg 29 im Bereich der Betätigungsfahne 33 angeformt ist.

Zur Längeneinstellung des Installationsbauelements 1, also zur Anpassung von diesem an die Höhe des Gebäuderaums, weist das Installationsbauelement 1 ein Teleskop-Ausziehelement 44 auf. Letzteres hat zwei als Endlosprofile aus Aluminium ausgeführte Ausziehprofile 45, die jeweils in einen der beiden Unterbringungsräume 12 eintauchen. Die Ausziehprofile 45 sind dabei komplementär zu den Unterbringungsräume 12 derart geformt, dass sie in diesen geführt sind. Eine vorgegebene Ausziehposition der Ausziehprofile 45 in den Unterbringungsräumen 12 kann mit Hilfe nicht näher dargestellter Fixierschrauben festgelegt werden. Jedes der Ausziehprofile 45 weist ein im Querschnitt im Wesentlichen U-förmiges Hauptprofil 46 auf, welches von einem Deckprofil 47 abgedeckt wird. Die Ausziehprofile 45 sind derart in den Unterbringungsräumen 12 orientiert, dass das Deckprofil 47 dem Abdeckprofil 8 zugewandt ist.

Das Trägerprofil 4 mit den Abdeckprofilen 8 einerseits und das Teleskop-Ausziehelement 44 andererseits stellen zwei zur Längenverstellung des Installationsbauelements 1 teleskopisch zueinander verlagerbare Profilelemente dar.

Deckenseitig weist das Teleskop-Ausziehelement 44 ein Befestigungselement 48 zur Anbringung des Teleskop-Ausziehelements 44 an der Decke des Gebäuderaums auf. Das Befestigungselement 48 weist hierzu Schraublöcher 49 auf.

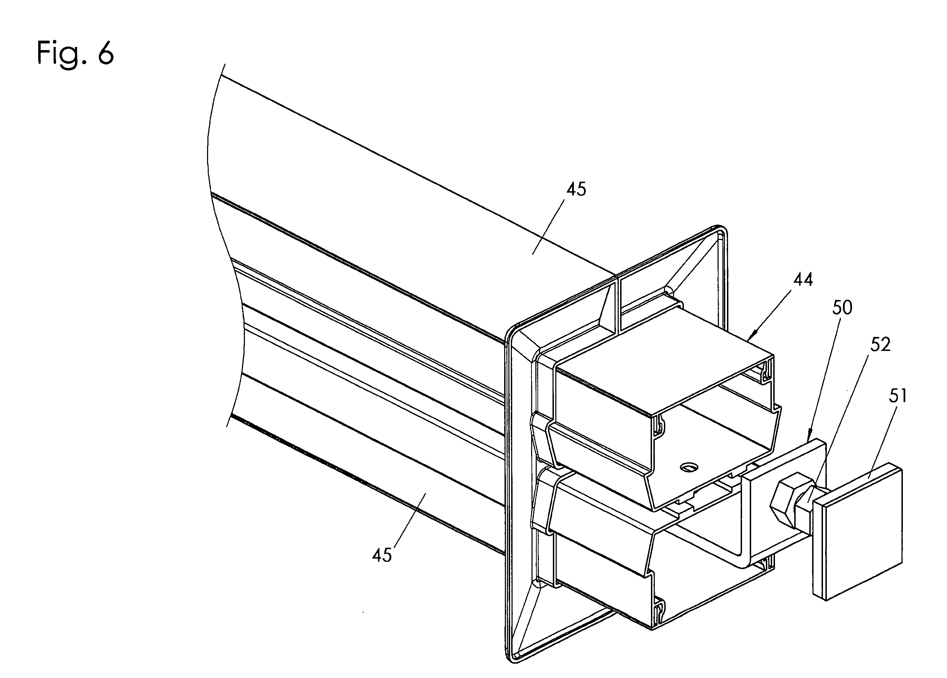

Fig. 6 zeigt eine weitere Ausführungsform eines Befestigungselements 50, welches anstelle des Befestigungselements 48 nach den Fig. 1 bis 5 zum Einsatz kommen kann. Das Befestigungselement 50 weist einen Stützstempel 51 auf. Der Abstand einer oberen Stützwand des Stützstempels 51 zum restlichen, am Trägerprofil 4 und den Abdeckprofilen 8 festgelegten Teleskop-Ausziehelement 44 ist über eine Schraubverbindung 52 einstellbar.

Das Installationsbauelement 1 wird folgendermaßen eingesetzt: Zunächst wird das Installationsbauelement 1 im Gebäuderaum montiert. Hierzu wird es zunächst fußseitig an seinem Standplatz festgeschraubt. Bei der Ausführung nach den Fig. 1 bis 5 folgt auch eine deckenseitige Verschraubung über das Befestigungselement 48. Die Ausziehstellung des Teleskop-Ausziehelementes 44 wird mit Hilfe der Fixierschrauben fixiert.

Bei der Ausführung nach Fig. 6 wird das Teleskop-Ausziehelement 44 soweit ausgezogen, bis der Stützstempel 51 mit der Gebäudedecke in Kontakt kommt. Anschließend wird das Teleskop-Ausziehelement 44 mit Hilfe der Fixierschrauben fixiert. Sodann wird mit Hilfe der Schraubverbindung 52 der Stützstempel 51 weiter nach oben verlagert, sodass das Installationsbauelement 1 nach Fig. 6 oben festgeklemmt und damit festgelegt wird.

Das Installationsbauelement 1 wird sodann an eine gebäudeseitige Versorgung angeschlossen. Anschließend erfolgt die Installation der Versorgungsleitungen im Installationsbauelement 1. Hierzu können Steckelemente wie die Elektrobuchse 14 in Installationsaufnahmen an der Installationswand 13 des Abdeckprofils 8 vorgesehen sein. Bei dieser Installationsvariante ist es möglich, externe Geräte über die Steckelemente ohne Weiteres über das Installationsbauelement 1 an- oder abzuschließen. Alternativ ist es möglich, die Versorgungsleitungen direkt in das Installationsbauelement 1 einzuführen. Dies ist einerseits von unten über die Montageöffnung 12a und andererseits von der Seite durch abschnittsweises Verdrängen der flexiblen äußeren Wandabschnitte 40 möglich. Die vom Installationsbauelement 1 weg- oder zu diesem hinführende Kabellänge kann auf ein Minimum reduziert werden, da ein Zuführen der Versorgungsleitungen praktisch in jeder Höhe des Installationsbauelements 1 möglich ist. Die in den Unterbringungsräumen 12 untergebrachten Versorgungsleitungen werden nach Bedarf in die Halteklammern 34 eingelegt, sodass sie - soweit dies erforderlich ist - von diesen geführt sind.

Alternativ zu einer gleichzeitigen boden- und deckenseitigen Befestigung, wie im Rahmen der Ausführungsvarianten nach den Fig. 1 bis 6 dargestellt, ist es bei einer weiteren Ausführung eines Installationsbauelements möglich, dieses nur bodenseitig festzulegen, also als frei endende Installationssäule einzusetzen.

Anstelle der Ausführungen nach den Fig. 1 bis 6 mit zwei Unterbringungsräumen 12 beiderseits des zentralen Trägerprofils 4 weist eine weitere Ausführungsform eines Installationsbauelements nur einen Unterbringungsraum 12 auf. Diese Ausführungsform entspricht einer Hälfte des durch die Mittelebene 7 halbierten Installationsbauelements nach den Fig. 1 bis 6, wobei die Längsnuten 35 bei der Ausführung mit einem Unterbringungsraum 12 derart zum verbleibenden Abdeckprofil 8 hin versetzt angeordnet sind, dass auch bei der Ausführungsform mit einem Unterbringungsraum 12 vollständige Längsnuten 35 vorliegen, über die eine Befestigung externer Elemente möglich ist.

Neben einer vertikalen Anordnung ist auch eine horizontale Anordnung des Installationsbauelements 1 möglich. Auf ein Teleskop-Ausziehelement 44 und auf einem Fuß 2 kann in diesem Fall verzichtet werden. Das horizontal eingesetzte Installationsbauelement kann z. B. zwischen zwei aneinander angrenzenden Büroschreibtischen angeordnet sein. Diese Anordnung kann so sein, dass eine obere Abschlusswand des Installationsbauelements mit den Schreibtisch-Oberseiten fluchtet. Alternativ kann das horizontale Installationsbauelement auch auf die Schreibtisch-Oberseiten aufgesetzt sein.

## Patentansprüche

1. Installationsbauelement (1) zur Unterbringung von Versorgungsleitungen
- mit einem Trägerprofil (4),
- mit mindestens einem Abdeckprofil (8),
- wobei zwischen dem Trägerprofil (4) und dem Abdeckprofil (8) ein Unterbringungsraum (12) gebildet ist,
**dadurch gekennzeichnet, dass** das Abdeckprofil (8) zumindest abschnittsweise (9 bis 11) am Trägerprofil (4) über eine Verbindungseinrichtung (15) fixiert ist, welche aufweist:
- ein Scharnierelement (16) mit einem trägerprofilseitigen (17) und einem abdeckprofilseitigen (18) Scharnierkörper, wobei die Scharnierkörper (17, 18) über ein Scharniergelenk (23) derart miteinander verbunden sind, dass in einer Schließstellung des Scharnierelements (16) der Unterbringungsraum (12) nicht von außen einsehbar ist, und in einer Offenstellung des Scharnierelements (16) der Unterbringungsraum (12) von außen frei zugänglich ist,
- ein Rastelement (24) mit einem Rastkörper (25) und einem Gegenkörper (26), welches derart ausgeführt ist, dass es in einer Raststellung das Abdeckprofil (8) am Trägerprofil (4) in der Schließstellung des Scharnierelements (16) fixiert und in einer Freigabestellung ein Verschwenken des Abdeckprofils (8) relativ zum Trägerprofil (4) um das Schwenkgelenk (23) ermöglicht.

2. Installationsbauelement nach Anspruch 1, **dadurch gekennzeichnet, dass** zumindest ein Scharnierkörper (17, 18) einerseits und der Rastkörper (25) und/oder der Gegenkörper (26) andererseits als zu den Profilen (4, 8) separate Bauteile ausgeführt sind.

3. Installationsbauelement nach Anspruch 1 oder 2, **dadurch gekennzeichnet, dass** mindestens einer der Scharnierkörper (17, 18) und/oder der Rastkörper (25) und/oder der Gegenkörper (26) als Kunststoffbauteile, insbesondere als Spritzguß-Bauteile, ausgeführt sind.

4. Installationsbauelement nach einem der Ansprüche 1 bis 3, **dadurch gekennzeichnet, dass** mindestens einer der Scharnierkörper (17, 18) und/oder der Rastkörper (25) und/oder der Gegenkörper (26) aus glasfaserverstärktem Kunststoff, insbesondere Polyamid, ausgeführt sind.

5. Installationsbauelement nach einem der Ansprüche 1 bis 4, **gekennzeichnet durch** einen Mehrzahl von Halteklammern (34), die im Unterbringungsraum (12) zur Führung der Versorgungsleitungen angeordnet sind.

6. Installationsbauelement nach einem der Ansprüche 1 bis 5, **dadurch gekennzeichnet, dass** das Trägerprofil (4) randseitig mindestens eine Längsnut (35) zur Verbindung mit einem weiteren, externen Bauteil aufweist.

7. Installationsbauelement nach einem der Ansprüche 1 bis 6, **gekennzeichnet durch** eine Erdungsbrücke (37) mit einem flexiblen Leiter (39) zur Schaffung eines elektrischen Kontaktes zwischen den Profilen (4, 8).

8. Installationsbauelement nach einem der Ansprüche 1 bis 7, **dadurch gekennzeichnet, dass** der Unterbringungsraum (12) in Schließstellung des Scharnierelements (16) zumindest teilweise von einem flexiblen Wandabschnitt (40), insbesondere einer Lippendichtung, derart begrenzt ist, dass eine Versorgungsleitung von außen in den Unterbringungsraum (12) auch in der Schließstellung einführbar ist.

9. Installationsbauelement nach einem der Ansprüche 1 bis 8, **gekennzeichnet durch** mindestens zwei zur Längenverstellung des Installationsbauelementes (1) teleskopisch zueinander verlagerbare Profilelemente (4, 8, 44).

10. Installationsbauelement nach Anspruch 9, **gekennzeichnet durch** mindestens ein im Unterbringungsraum (12) geführtes, insbesondere mehrteiliges Teleskop-Ausziehelement (44).

11. Installationsbauelement nach einem der Ansprüche 1 bis 10, **gekennzeichnet durch** ein von außen zugängliches Betätigungselement (33), mit dem das Rastelement (24) zwischen der Schließ- und der Freigabestellung verlagerbar ist.
